(19) Europäisches Patentamt
European Patent Office
Office européen des brevets

(11) Publication number : 0 507 593 B1

(12) # EUROPEAN PATENT SPECIFICATION

(45) Date of publication of patent specification : 06.09.95 Bulletin 95/36

(51) Int. Cl.$^6$ : **H04N 5/217,** H04N 1/40

(21) Application number : 92302935.9

(22) Date of filing : 03.04.92

(54) **Flare corrected video cameras.**

(30) Priority : 04.04.91 JP 99418/91

(43) Date of publication of application : 07.10.92 Bulletin 92/41

(45) Publication of the grant of the patent : 06.09.95 Bulletin 95/36

(84) Designated Contracting States : DE FR GB

(56) References cited :
EP-A- 0 420 152
DE-A- 2 159 473
PATENT ABSTRACTS OF JAPAN vol. 11, no. 117 (E-498)11 April 1987 & JP-A-61263373
PATENT ABSTRACTS OF JAPAN vol. 10, no. 158 (E-409)6 June 1986 & JP-A-61013888

(73) Proprietor : SONY CORPORATION
7-35 Kitashinagawa 6-chome
Shinagawa-ku
Tokyo 141 (JP)

(72) Inventor : Nakamura, Koichi, c/o Patents Division
Sony Corporation,
6-7-35 Kitashinagawa
Shinagawa-ku, Tokyo 141 (JP)

(74) Representative : Pilch, Adam John Michael et al
D. YOUNG & CO.,
21 New Fetter Lane
London EC4A 1DA (GB)

EP 0 507 593 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to flare corrected video cameras, that is video cameras with circuits for correcting flare in video signals.

When using a video camera, there may sometimes occur a phenomenon termed flare in which incident light from a subject being photographed is partially reflected with diffusion inside the camera thereby causing a whitish fog in the subject image. Such flare is rendered more conspicuous in accordance with an increase in the high luminance portions in the subject, and this degrades the quality of the reproduced image.

For the purpose of preventing this undesired phenomenon, a video camera is generally equipped with a flare correcting circuit so as to correct flare in the video signal.

Figure 1 of the accompanying drawings shows an exemplary video camera in which an output signal S1 from a charge-coupled device (CCD) image sensor 1 is supplied to a sampling-holding circuit 2, from which an effective video signal S2 is delivered to a pre-knee circuit 4 via a gain control circuit 3.

The pre-knee circuit 4 has an input-output characteristic as shown in Figure 2 so that, when the level of the input video signal S2 has exceeded the pre-knee point, the gain of the output video signal S4 is reduced. Therefore, in the video signal S4, the level of its high luminance component is compressed more than that of the video signal S2.

The video signal S4 is supplied to an analog-to-digital (A-D) converter 5 in which it is converted to a digital video signal S5 of which one sample may be composed of ten parallel bits for example, and then the digital video signal S5 is supplied to a flare correcting circuit 6.

The flare correcting circuit 6 includes a subtracter 61 and an integrator 69 with a time constant ranging from a period of several fields to one second or so, wherein the digital video signal S5 from the converter 5 is supplied as a main signal to the subtracter 61 while being supplied also to the integrator 69, from which a DC component S69 (digital signal corresponding to the DC component of the signal S4) is then supplied to the subtracter 61.

In this case, the DC component S69 is proportional to the whitish fog of the subject image derived from the flare. In the subtracter 61, the DC component S69 is subtracted from the video signal S4, so that the resultant signal S6 is effectively obtained by removing from the original video signal S5 the whitish fog caused by the flare. Thus the signal S6 is a flare-corrected video signal.

The video signal S6 is then supplied to a gamma correcting circuit 7 for correction with respect to the gamma factor, and the corrected signal appears at a terminal 8.

However, in the flare correcting circuit 6 described above, the flare correction may be insufficient if any high luminance portion is present in the subject being photographed.

When, for example, the subject is a high-luminance white disc on a black background as illustrated in Figure 3A, a video signal S4 representing the subject has a waveform as shown in Figure 3B. If the allowable input level (dynamic range) of the A-D converter 5 is V5 and is lower than the maximum level of the video signal S4, it follows that the signal S4 will be clipped at the level V5 and only the shaded portion in Figure 3B will be converted into the digital video signal S5.

Therefore, when the flare correction signal S69 is formed from such a video signal S5, the non-shaded portion above the level V5 of the signal S4 is not used for forming the flare correction signal S69, whereby insufficient correction may be applied.

Although a pre-knee circuit 4 is provided in the preceding stage of the A-D converter 5, the level of some high luminance components of the video signal S4 may exceed the allowable input level V5 of the converter 5 since the pre-knee characteristic is not rendered flat in the high luminance component.

The above problem can be overcome if the peak value of the signal S4 supplied to the A-D converter 5 is arranged to be lower than the allowable input level V5 by adjusting the gain of the gain control circuit 3.

However, the resolution at the conversion performed by the A-D converter 5, namely the range of the analog level per bit, is widened consequently causing an increase in the quantisation error. Therefore, due to the presence of high luminance components in the video signal, the quantisation at the visually conspicuous gray levels is rendered coarse.

According to one aspect of the invention there is provided a video camera including an image sensor for producing an analog video signal, an analog-to-digital converter for converting the analog video signal to a digital video signal in a manner that any component thereof above a predetermined luminance level is clipped, and a flare correcting circuit for removing any flare component superposed on the digital video signal, said flare correcting circuit comprising:

an average luminance level detector for detecting the average luminance level during a time period of several fields of the digital video signal;

a clip period detector for detecting the duration of the time period in which the analog video signal is clipped during conversion to the digital video signal by said converter;

a flare correction signal generator for producing a flare correction signal in accordance with the output signal of said average luminance level detector and the output signal of said clip period detector; and

a subtracter for subtracting the flare correction signal from the digital video signal.

According to another aspect of the invention there is provided a flare correcting circuit for a video camera which generates a digital video signal in which any component of an image signal above a predetermined luminance level is clipped, the circuit comprising:

an average luminance level detector for detecting the average luminance level during a time period of several fields of the digital video signal;

a clip period detector for detecting the duration of the time period in which the image signal is clipped during formation of the digital video signal;

a flare correction signal generator for producing a flare correction signal in accordance with the output signal of said average luminance level detector and the output signal of said clip period detector; and

a subtracter for subtracting the flare correction signal from the digital video signal.

A preferred embodiment of the invention provides a video camera equipped with an improved flare correcting circuit which is capable of solving the problems described with reference to the previous proposal.

Flare correction for the video signal is executed by the signal representing the average luminance level and also by the measured value obtained during the clip period, so that effective flare correction can be achieved despite the existence of any high luminance portion in the subject.

The invention will now be described by way of example with reference to the accompanying drawings, throughout which like parts are referred to by like references, and in which:

Figure 1 is a block diagram of a previously-proposed video camera including a flare correcting circuit;

Figure 2 graphically shows the characteristics of the camera of Figure 1;

Figure 3 schematically illustrates the operation of the camera of Figure 1;

Figure 4 is a block diagram of a first embodiment of the present invention;

Figure 5 graphically shows the characteristics of the first embodiment;

Figure 6 schematically illustrates the operation of the first embodiment;

Figures 7 and 8 graphically show further characteristics of the first embodiment;

Figure 9 is a block diagram of a second embodiment of the present invention;

Figure 10 is a block diagram of a third embodiment of the present invention;

Figure 11 schematically illustrates the operation of the third embodiment; and

Figure 12 is a block diagram of a fourth embodiment of the present invent ion.

In Figure 4, which shows a first embodiment of the invention, a digital video signal S5 from an A-D converter 5 (the components 1 to 4 being as described with reference to Figure 1) is supplied as a main signal to a subtracter 61 while also being supplied to a low-pass filter 62, so that there is obtained a digital video signal S62 from which a signal component corresponding to the high-frequency component of the original analog video signal S4 has been removed. Removal of the high-frequency component is performed in order to reduce the number of bits for a signal addition which will be described later. As a result of the high-frequency component removal, the detail in the subject being photographed is partially suppressed, but this causes only slight degradation of the image since the degree of suppression is low.

The signal S62 from the filter 62 is supplied to an inverse converter 63. This converter has an input-output characteristic represented by a solid line in Figure 5, which is complementary to the pre-knee characteristic (represented by a broken line) of the pre-knee circuit 4. Therefore a video signal S63 from the inverse converter 63 has the same linearity relationship as that of the video signal S2.

However, in this video signal S63 also, any component exceeding the allowable input level V5 of the A-D converter 5 will have been clipped. More specifically, when the subject is a high-luminance white disc on a black background as illustrated in Figure 6A (similar to the aforementioned example of Figure 3A), the waveform of the video signal S2 is as shown in Figure 6B with changes in the level where the shaded portion corresponds to the video signal S63.

The signal S63 is supplied to an adder 64 in which one pixel (one sample) of each field of the signal S63 is sequentially added or integrated, and a signal S64 from the adder 64 is supplied to a microcomputer 65 on a field-by-field basis.

The microcomputer 65 is supplied also with a signal N64 which indicates the number of additions of the pixels during the fields, in other words the number of samples of the signal S63.

In the microcomputer 65, a division is executed to calculate X64 = S64/N64. In this case, the value S64 represents the area of the shaded portion in Figure 6B, and the value N64 denotes the horizontal length thereof (duration of one field). Therefore the quotient X64 represents the average luminance level obtained by averaging the shaded portion in Figure 6B over one field.

The signal S62 from the filter 62 is also supplied to a comparator 66, while the signal indicating the allowable input level V5 of the A-D converter 5 is supplied as a reference level to the comparator 66, which then produces a comparison output S66 which is "1" when S62 $\geqq$ V5. Consequently, the comparison output S66 becomes "1" when the level of the analog video signal S4 has exceeded the allowable input level V5 of the A-D converter 5.

The comparison output S66 is supplied as a count enable signal to a pixel counter 67, and the signal S62 from the filter 62 is supplied as a count input also to the counter 67, wherein the pixels of the signal S62 during the period of S66 = "1" are counted per field, and the count output S67 thus obtained is supplied to the microcomputer 65 during each field.

Subsequently in the microcomputer 65, the following calculations are executed in order to obtain a correction value Y.

$$Y = Y1 + Y2 \quad (1)$$

$$Y1 = a \,.\, X64 + b \quad (2)$$

$$Y2 = c \,.\, S67 + d \quad (3)$$

where a to d are constants.

Although a detailed description will be given later, Equation (2) is graphically shown in Figure 7 in which a first flare correction amount is represented along the ordinate Y1. Meanwhile, Equation (3) is graphically shown in Figure 8 in which a second flare correction amount is represented along the ordinate Y2.

Further in the microcomputer 65, the correction value Y is obtained during every field, and the average S65 is calculated with regard to the values Y obtained during the eight latest fields. Then the average value S65 is latched by a latch circuit 68 and supplied as a flare correction signal to the subtracter 61, where the average value S65 is subtracted from the video signal S5, and a resultant signal S6 is supplied to a terminal 8 via a gamma corrector 7.

In this case, the component of Equation (2) in the average S65 has the value obtained by averaging the luminance levels X64 during the eight latest fields, so that this component corresponds to the flare correction signal S69 obtained by integrating the video signal with the time constant during several fields in the flare correcting circuit 6 in Figure 1.

The level of the video signal S4 is compressed in the pre-knee circuit 4, but the linearity of the video signal S63 supplied to the adder 64 is restored to the former state by the inverse converter 63, whereby the component of Equation (2) in the average S65 is rendered equivalent to the flare correction signal formed from the video signal S2 prior to the pre-knee circuit 4.

Accordingly, if the video signal S4 is lower than the allowable input level V5 of the A-D converter 5, effective flare correction can be performed by such component.

The component of Equation (3) in the average S65 corresponds to the period when the level of the video signal S4 exceeds the allowable input level V5 of the A-D converter 5, and this component has the value corresponding to the portion of the signal S4 above the level V5. Therefore the average value S65 is the flare correction signal which is equivalent to the signal formed according particularly to Equation (3) from the video signal S2 prior to the A-D conversion.

Consequently the video signal S6 from the subtracter 61 is properly corrected with respect to the flare even although the former video signal S4 has passed through the pre-knee circuit 4 or includes any high luminance portion beyond the allowable input level V5 of the A-D converter.

In the case of a colour video camera, the aforementioned signal line may be provided for three channels for red, blue and green signals, and the output signals therefrom may be encoded, for example in conformity with the NTSC format. It is also possible to modify the circuit in such a manner that the clock pulses employed for obtaining the signal S62 are counted instead of the pixels of the signal S62, and the counted number may be used as a measured value during the clip period of the A-D converter 5.

Since the flare correcting circuit 6 of Figure 4 performs correction of the video signal S5 by applying the flare correction signal S65, the dynamic range of the correction signal S65 is narrower than that of the video signal S5 and, in the case when each sample of the video signal S5 is composed of ten bits as previously mentioned, the correction signal S65 is composed generally of a smaller number, such as eight bits.

However, when the correction signal S65 has an 8-bit composition, the output port of the microcomputer 65 for delivering the signal S65 therefrom needs to have a capacity of eight bits. In addition, there is required an 8-bit capacity in the latch circuit 68 and also in the signal line between the output port and the latch circuit 68.

Since the microcomputer 65 will generally be furnished with a margin in its processing capability, flare correction signals for red, blue and green signals in a colour video camera can be formed by the single microcomputer. In such a case, however, three 8-bit output ports will be required in the microcomputer 65, and further the latch circuit 68 will need to have a 24-bit capacity.

Figure 9 is a block diagram of a second embodiment for overcoming the above problems arising in the flare correcting circuit of Figure 4.

The embodiment of Figure 9 represents an exemplary case in which a 2-bit flare correction signal is provided by the microcomputer 65.

The present flare correction signal S65 formed in the microcomputer 65 is compared with the preceding-field correction signal S65, and a resultant signal SD of such comparison is provided by the microcomputer 65.

The two bits of the signal SD representing the result of such comparison between the present correction field and the preceding-field correction signal S65 become as follows, for example.

| | | |
|---|---|---|
| When there is no difference: | SD = "00" | (1) |
| When the former is smaller: | SD = "01" | (2) |
| When the former is greater: | SD = "10" | (3) |

When the result of the comparison is (2) or (3), the signal SD is generated repeatedly a number of times corresponding to the difference between the present correction signal S65 and the preceding-field correction signal S65.

The signal SD is supplied from the microcomputer 65 to an integrator 71 in which the following processes are executed.

When SD = "00": the integral value S71 is left unchanged

When SD = "01": S71 is decreased by one per signal SD.

When SD = "10": S71 is increased by one per signal SD. The integral value S71 may, for example, be expressed by eight bits.

When SD = "00", the integral value S71 is equal to the flare correction signal S65.

The integral value S71 appears in parallel and is then supplied as a flare correction signal to the subtracter 61, in which flare correction is performed on the video signal S5.

Thus the flare correction signal S65 is converted in the microcomputer 65 to a signal SD which indicates the change in the signal S65, and then the signal SD is supplied from the microcomputer 65 to the integrator 71 (serving also as a latch circuit), whereby a flare correction signal S71 is obtained. Therefore the output port of the microcomputer 65 for delivering the signal SD therefrom requires merely a 2-bit composition, so that the number of bits needed in the output port can be reduced. It is also possible to reduce to two bits the required capacity of the SD signal line between the output port and the integrator 71.

In the case of a colour video camera, it is possible to further decrease the number of bits from twenty four to six (= 2 bits x 3 colours) in the output port of the microcomputer 65.

Figure 10 is a block diagram of a third embodiment of the invention in which a 1-bit flare correction signal is obtained from the microcomputer 65.

In the microcomputer 65, a present flare correction signal S65 is compared with a preceding-field correction signal S65, and then a signal SD representing the result of such comparison is provided by the microcomputer 65. When the present correction signal S65 indicates no change as compared with the preceding-field correction signal S65,

SD = "0" and SD = "1" are repeated in synchronism with clock pulses CK. (4)

If the former is smaller than the latter, the signal SD = "0" is supplied. (5)

If the former is greater than the latter, the signal SD = "1" is supplied. (6)

The signal SD is supplied as a count-direction control signal from the microcomputer 65 to a 9-bit up-down counter 72, which is placed in a down-count mode when SD = "0" or in an up-count mode when SD = "1". Clock pulses CK are supplied as a count input to the counter 72. The period of such clock pulses CK is set to be equal to the field period, for example.

Therefore, in the case (4) above, the count mode of the counter 72 is selectively switched in response to the signal S72 synchronously with the clock pulse CK. As the counter 72 counts the clock pulses CK, only the least significant bit (LSB) b0 of its counted value S72 is changed to "0" or "1" in synchronism with the clock pulse CK, while the eight high-order bits b8 to b1 of the counted value S72 remain unchanged (in contrast to the LSB b0).

In the case (5), the counted value S72 is decreased in accordance with each clock pulse CK, whereas in the case (6), the counted value S72 is increased in accordance with each clock pulse CK.

Consequently it follows that the eight high-order bits b8 to b1 of the counted value S72 correspond to the flare correction signal S65.

The bits b8 to b1 of the counted value S72 are supplied in parallel as a flare correction signal to the subtracter 61. In this stage, as shown in Figure 11, the bits b8 to b1 of the counted value S72 are supplied after being shifted by one bit towards the LSB with respect to the video signal S5, and a subtraction is executed between the bits b7 to b0 of the signal S5 and the bits b8 to b1 of the signal S72.

Accordingly the subtracter 61 produces a video signal S6 on which the flare correction has been effected by the signal S72.

In this embodiment, the output port of the microcomputer 65 for delivering the signal SD therefrom requires merely a 1-bit capacity, whereby the number of bits of the output port can further be reduced. In addition, that of the SD signal line between the output port and the counter 72 is also reducible to a 1-bit capacity.

In a colour video camera, a flare correcting circuit needs to be provided for each of the signal channels for red, blue and green signals. However, if the flare correcting circuit 6 of Figure 4 is used for each signal channel, the circuit scale in the whole camera is significantly enlarged causing an increase in both dimensions and weight, so that problems arise with regard to portability and production costs.

Figure 12 shows a fourth embodiment of this invention representing a colour video camera for overcoming the above problem.

In the block diagram of Figure 12, the component elements corresponding to the CCD image sensor 1 and the circuits 2 to 5 in Figure 4 are denoted by the same reference numerals with suffixes R, G or B for red, green or blue channels respectively. A digital red signal S5R, a green signal S5G and a blue signal S5B are supplied from the A-D converters 5R, 5G and 5B, respectively to respective subtracters 61R, 61G and 61B.

The signals S5R, S5G, S5B from the converters 5R, 5G, 5B are also supplied to a switching circuit 60 which is sequentially switched every field in response to a signal SV, so that the signals S5R, S5G, S5B are sequentially delivered therefrom. Subsequently the signals S5R, S5G, S5B in the field sequence are supplied to a low-pass filter 62.

The filter 62 and the following circuits 63 to 67 may be the same as the aforementioned circuits 62 to 67 in Figure 4 with the exception that the microcomputer 65 is supplied with the signal SV which indicates the switch position of the switching circuit 60. In response to the signal SV, the microcomputer 65 makes a decision as to which of the colour signals S5R, S5G, S5B is being supplied to the low-pass filter 62, and then forms flare correction signals SR, SG, SB for the colour signals S5R, S5G, S5B respectively in field sequence.

More specifically, during the field in which the red signal S5R is supplied to the filter 62, the adder 64 and the counter 67 perform addition and count respectively with regard to the red signal S5R and, upon termination of the field relative to the red signal S5R, the results of such addition and count are processed in the microcomputer 65 so that the value YR corresponding to Equation (1) is calculated with respect to the red signal S5R.

Similarly, during the field in which the green signal S5G is supplied to the filter 62, the adder 64 and the counter 67 perform addition and count respectively with regard to the green signal S5G and, upon termination of the field relative to the green signal S5G, the results of such addition and count are processed in the microcomputer 65 so that the value YG corresponding to Equation (1) is calculated with respect to the green signal S5G.

Further, during the field in which the blue signal S5B is supplied to the filter 62, the adder 64 and the counter 67 perform addition and count with regard to the blue signal S5B and, upon termination of the field relative to the blue signal S5B, the results of such addition and count are processed in the microcomputer 65 so that the value YB corresponding to Equation (1) is calculated with respect to the blue signal S5B.

Thus the values YR, YG and YB are calculated in the field sequence by the microcomputer 65.

Furthermore, the values YR of the latest eight fields out of the entire calculated values YR are averaged by the microcomputer 65 to obtain a desired flare correction signal SR, which is then converted to a 1-bit signal SDR corresponding to the signal SD in the aforementioned flare correcting circuit of Figure 10. Similarly, in the microcomputer 65, flare correction signals SG and SB are produced from the values YG and YB during the latest eight fields, and then these flare correction signals SG and SB are converted respectively to a 1-bit signal SDG and a 1-bit signal SDB.

The signals SDR, SDG, SDB thus obtained are supplied from the microcomputer 65 in field sequence to a switching circuit 68 which is selectively changed by the signal SV, so that the signals SDR, SDG, SDB are delivered separately from the switching circuit 68. Subsequently the signals SDR, SDG, SDB are supplied as count-direction control signals to the up-down counters 72R, 72G, 72B respectively. Clock pulses CK are selectively supplied as count inputs to the counters 72R, 72G, 72B in synchronism with the supply of the signals SDR, SDG, SDB.

Consequently the former flare correction signals SR, SG, SB are supplied from the counters 72R, 72G, 72B respectively to the subtracters 61R, 61G, 61B.

In this case, the flare correction signals SR, SG, SB are formed from the field-sequential signals S5R, S5G, S5B in contrast with the aforementioned flare correction signal S65 of Figure 4 formed from the successive-field signals S5. However, this causes no problems since each of such correction signals SR, SG, SB may be an average over a time ranging from several fields to one second or so.

Thus, in this embodiment in which the flare correction signals SR, SG, SB are formed from the red signal S5R, green signal S5G and blue signal S5B in the field sequence by a time division system, it is possible to use the flare correction circuit 6 in common for all of the colour signals, so that the circuit scale in the video camera is not unduly enlarged. Also, the production cost is not raised substantially since the only additional components are the switching circuits 60, 68, 73 and two further counters 72.

Furthermore, a 1-bit capacity is sufficient in each of the output ports of the microcomputer 65 for delivering the signals SDR, SDG, SDB to the counters 72R, 72G, 72B.

The counters 72R, 72G, 72B in this embodiment may be replaced by integrators so that the flare correction signals SR, SG, SB can be obtained in the same manner as in the aforementioned example of Figure 9. In addition, instead of the pixels of the signal from the filter 62 being counted by the counter 67, the clock pulses for obtaining such signal may alternatively be counted and used as a measured value during the clip period of the A-D converter 5.

In the above embodiments, the red, green and blue signals representative of the three primary colours may be replaced by cyan, magenta and yellow signals instead.

## Claims

1. A video camera including an image sensor (1) for producing an analog video signal (S1), an analog-to-digital converter (5) for converting the analog video signal (S1) to a digital video signal (S5) in a manner that any component thereof above a predetermined luminance level (V5) is clipped, and a flare correcting circuit (6) for removing any flare component superposed on the digital video signal (S5), said flare correcting circuit (6) comprising:

an average luminance level detector (64) for detecting the average luminance level during a time period of several fields of the digital video signal (S5);

a clip period detector (66, 67) for detecting the duration of the time period in which the analog video signal (S1) is clipped during conversion to the digital video signal (S5) by said converter (5);

a flare correction signal generator (65) for producing a flare correction signal (S65) in accordance with the output signal (S64, N64) of said average luminance level detector (64) and the output signal (S67) of said clip period detector (66, 67); and

a subtracter (61) for subtracting the flare correction signal (S65) from the digital video signal (S5).

**2.** A video camera according to claim 1, wherein said clip period detector comprises:

a comparator (66) for comparing the level of said digital video signals (S5) during a time period of several fields with a predetermined level (V5); and

a counter (67) for counting the digital video signals (S66) detected by said comparator (66) as having a level above said predetermined level (V5).

**3.** A video camera according to claim 1 or claim 2, wherein said flare correction signal generator comprises:

a flare signal variation detector (65) for sequentially outputting successive 2-bit digital signals (SD) corresponding to the variation of the present-field flare correction signal in comparison with the preceding-field flare correction signal; and

an integrator (71) for integrating said 2-bit digital signals (SD) and the preceding-field flare correction signal, and outputting the integral value as the present-field correction signal (S71).

**4.** A video camera according to claim 1 or claim 2, wherein said flare correction signal generator comprises:

a flare signal variation detector (65) for producing a 1-bit digital signal (SD) which corresponds to the variation of the present-field flare correction signal in comparison with the preceding-field flare correction signal; and

an up-down counter (72) controlled in response to said digital signal (SD) synchronously with a clock signal (CK) of a predetermined cycle in such a manner as to increase, decrease or retain the count thereof and outputting the counted value as said flare correction signal (S72).

**5.** A video camera according to any one of the preceding claims, comprising:

a pre-knee circuit (4) connected between said image sensor (1) and said analog-to-digital converter (5), and serving to compress the output signal of said image sensor (1) having any level above a predetermined level; and

an inverse converter (63) connected between said analog-to-digital converter (5) and said average luminance level detector (64), and serving to process the signal in an inverse manner to the process executed by said pre-knee circuit (4).

**6.** A flare correcting circuit for a video camera which generates a digital video signal (S5) in which any component of an image signal above a predetermined luminance level (V5) is clipped, the circuit (6) comprising:

an average luminance level detector (64) for detecting the average luminance level during a time period of several fields of the digital video signal (S5);

a clip period detector (66, 67) for detecting the duration of the time period in which the image signal is clipped during formation of the digital video signal (S5);

a flare correction signal generator (65) for producing a flare correction signal (S65) in accordance with the output signal (S64, N64) of said average luminance level detector (64) and the output signal (S67) of said clip period detector (66, 67); and

a subtracter (61) for subtracting the flare correction signal (S65) from the digital video signal (S5).

**7.** A flare correcting circuit according to claim 6, wherein said clip period detector comprises:

a comparator (66) for comparing the level of said digital video signals (S5) during a time period of several fields with a predetermined level (V5); and

a counter (67) for counting the digital video signals (S66) detected by said comparator (66) as having a level above said predetermined level (V5).

**8.** A flare correcting circuit according to claim 6 or claim 7, wherein said flare correction signal generator comprises:

a flare signal variation detector (65) for sequentially outputting successive 2-bit digital signals (SD) corresponding to the variation of the present-field flare correction signal in comparison with the preceding-field flare correction signal; and

an integrator (71) for integrating said 2-bit digital signals (SD) and the preceding-field flare correction signal, and outputting the integral value as the present-field correction signal (S71).

**9.** A flare correcting circuit according to claim 6 or claim 7, wherein said flare correction signal generator comprises:
a flare signal variation detector (65) for producing a 1-bit digital signal (SD) which corresponds to the variation of the present field flare correction signal in comparison with the preceding-field flare correction signal; and
an up-down counter (72) controlled in response to said digital signal (SD) synchronously with a clock signal (CK) of a predetermined cycle in such a manner as to increase, decrease or retain the count thereof and outputting the counted value as said flare correction signal (S72).

## Patentansprüche

**1.** Videokamera, mit einem Bildwandler (1) zur Erzeugung eines analogen Videosignals (S1), einen Analog-Digital-Umsetzer (5) zum Umsetzen des analogen Videosignals (S1) in ein digitales Videosignal (S5) in einer Weise, so daß jede Komponente davon über einem vorgegebenen Luminanzpegel (V5) abgeschnitten wird, und einer Streulichtkorrekturschaltung (6) zur Entfernung jeder Streulichtkomponente, welche dem digitalen Videosignal (S5) überlagert ist, wobei die Streulichtkorrekturschaltung (6) umfaßt:
einen Durchschnittsluminanzpegeldetektor (64) zur Feststellung des Durchschnittsluminanzpegels während einer Zeitdauer von mehreren Teilbildern des digitalen Videosignals (S5);
einen Detektor (66,67) für die Zeitdauer des Abschneidens zur Feststellung der Dauer der Zeitspanne, in welcher das analoge Videosignal (S1) während der Umsetzung in ein digitales Videosignal (S5) durch den Umsetzer (5) abgeschnitten wird;
einen Streulichtkorrektursignalgenerator (65) zur Erzeugung eines Streulichtkorrektursignals (S65) in Übereinstimmung mit dem Ausgangssignal (S64, N64) des Durchschnittsluminanzpegeldetektors (64) und des Ausgangssignals (S67) des Detektors (66,67) für die Zeitdauer des Abschneidens; und
einen Subtrahierer (61) zum Subtrahieren des Streulichtkorrektursignals (S65) von dem digitalen Videosignal (S5).

**2.** Videokamera nach Anspruch 1, bei welcher der Detektor für die Zeitdauer des Abschneidens umfaßt:
einen Komparator (66) zum Vergleichen des Pegels der digitalen Videosignale (S5) während einer Zeitdauer von mehreren Teilbildern mit einem vorgegebenen Pegel (V5); und
einen Zähler (67) zum Zählen der digitalen Videosignale (S66), bei welchen der Komparator (66) festgestellt hat, daß sie einen Pegel oberhalb des vorgegebenen Pegels (V5) aufweisen.

**3.** Videokamera nach Anspruch 1 oder 2, bei welcher der Streulichtkorrektursignalgenerator umfaßt:
einen Streulichtsignalveränderungsdetektor (65) zur aufeinanderfolgenden Ausgabe von aufeinanderfolgenden 2-Bit-Signalen (SD), welche der Veränderung des Sreulichtkorrektursignals des augenblicklichen Teilbilds im Vergleich mit dem Streulichtkorrektursignal des vorhergehenden Teilbilds entsprechen; und
einen Integrator (71) zur Integration der 2-Bit-Signale (SD) und des Streulichtkorrektursignals des vorhergehenden Teilbildes, und zur Ausgabe des integrierten Wertes als das Korrektursignal (S71) des augenblicklichen Teilbildes.

**4.** Videokamera nach Anspruch 1 oder 2, bei welcher der Streulichtkorrektursignalgenerator umfaßt:
einen Streulichtsignalveränderungsdetektor (65) zur Erzeugung eines 1-Bit-Signals (SD), welches der Veränderung des Streulichtkorrektursignals des augenblicklichen Teilbildes im Vergleich mit dem Streulichtkorrektursignal des vorhergehenden Teilbildes entspricht; und
einen Aufwärts-Abwärts-Zähler (72), welcher als Reaktion auf das digitale Signal (SD) synchron mit einem Taktsignal (CK) eines vorbestimmten Zyklus in einer derartigen Weise gesteuert wird, um dessen Ergebnis zu vergrößern, zu verkleinern oder gleichzuhalten und den gezählten Wert als Streulichtkorrektursignal (S72) auszugeben.

**5.** Videokamera nach einem der vorhergegangenen Ansprüche, umfassend:
eine Vor-Kennlinienknick-Schaltung (4), welche zwischen dem Bildwandler (1) und dem Analog-Digital-Umsetzer (5) angeschlossen ist und zur Komprimierung des Ausgangssignals des Bildwandlers (1), welches irgendeinen Pegel oberhalb eines vorgegebenen Pegels besitzt, dient; und
einen Invers-Umsetzer (63), welcher zwischen dem AnalogDigital-Umsetzer (5) und dem Durchschnittsluminanzpegeldetektor (64) angeschlossen ist, und dazu dient, das Signal in einer zu dem Prozeß, welcher durch die Vor-Kennlinienknick-Schaltung ausgeführt worden ist, inversen Weise zu bearbeiten.

6. Eine Streulichtkorrekturschaltung für eine Videokamera, welche ein digitales Videosignal (S5) erzeugt, in welchem jede Komponente eines Bildsignals oberhalb eines vorgegebenen Luminanzpegels abgeschnitten wird, wobei die Schaltung (6) umfaßt:
einen Durchschnittsluminanzpegeldetektor (64) zur Feststellung des Durchschnittsluminanzpegels während einer Zeitdauer von mehreren Teilbildern des digitalen Videosignals (S5);
einen Detektor (66, 67) für die Zeitdauer des Abschneidens zur Feststellung der Dauer der Zeitspanne, in welcher das Bildsignal während der Ausbildung des digitalen Videsignals (S5) abgeschnitten ist;
einen Streulichtkorrektursignalgenerator (65) zur Erzeugung eines Streulichtkorrektursignals (S65) in Übereinstimmung mit dem Ausgangssignal (S64, N64) des Durchschnittsluminanzpegeldetektors (64) und des Ausgangssignals (S67) des Detektors (66, 67) für die Zeitdauer des Abschneidens; und
einen Subrahierer (61) zum Subrahieren des Streulichtkorrektursignals (S65) von dem digitalen Videosignal.

7. Streulichtkorrekturschaltung nach Anspruch 6, bei welcher der Detektor für die Zeitdauer des Abschneidens umfaßt:
einen Komparator (66) zum Vergleichen des Pegels der digitalen Videosignale (S5) während einer Zeitdauer von mehreren Teilbildern mit einem vorgegebenen Pegel (V5); und
einen Zähler (67) zum Zählen der digitalen Videosignale (S66), bei welchen der Komparator (66) festgestellt hat, daß sie einen Pegel oberhalb des vorgegebenen Pegels (V5) aufweisen.

8. Streulichtkorrekturschaltung nach Anspruch 6 oder 7, bei welcher der Streulichtkorrektursignalgenerator umfaßt:
einen Streulichtsignalveränderungsdetektor (65) zur aufeinanderfolgenden Ausgabe von aufeinanderfolgenden 2-Bit-Signalen (SD) entsprechend der Veränderung des Streulichtkorrektursignals des augenblicklichen Teilbilds im Vergleich mit dem Streulichtkorrektursignal des vorhergehenden Teilbilds; und
einen Integrator (71) zur Integration der 2-Bit-Signale (SD) und des Streulichtkorrektursignals des vorhergehenden Teilbilds und zur Ausgabe des Integralwerts als das Korrektursignal des augenblicklichen Teilbilds (S71).

9. Streulichtkorrekturschaltung nach Anspruch 6 oder 7, bei welcher der Streulichtkorrektursignalgenerator umfaßt:
einen Streulichtsignalveränderungsdetektor (65) zur Erzeugung eines 1-Bit-Signals (SD), welches der Veränderung des Streulichtkorrektursignals des augenblicklichen Teilbilds im Vergleich mit dem Streulichtkorrektursignal des vorhergehenden Teilbilds entspricht; und
einen Aufwärts-Abwärts-Zähler (72), welcher als Reaktion auf das digitale Signal (SD) synchron mit einem Taktsignal (CK) eines vorgegebenen Zyklus in einer derartigen Weise gesteuert wird, um dessen Ergebnis zu vergrößern, zu verringern oder gleichzuhalten und den gezählten Werts als Streulichtkorrektursignal (S72) auszugeben.

## Revendications

1. Caméra vidéo comportant un capteur d'images (1) pour produire un signal vidéo analogique (S1), un convertisseur analogique/numérique (5) pour convertir le signal vidéo analogique (S1) en un signal vidéo numérique (S5) d'une manière telle que toute composante de celui-ci au-dessus d'un niveau prédéterminé de luminance (V5) soit écrêtée, et un circuit de correction de la tache (6) pour éliminer toute composante de la tache superposée au signal vidéo numérique (S5), ledit circuit de correction de la tache (6) comprenant:
   - un détecteur de niveau moyen de luminance (64) pour détecter le niveau moyen de la luminance pendant une période de temps de plusieurs trames du signal vidéo numérique (S5);
   - un détecteur de période d'écrêtage (66, 67) pour détecter la durée de la période de temps dans laquelle le signal vidéo analogique (S1) est écrêté pendant la conversion en un signal vidéo numérique (S5) par ledit convertisseur (5);
   - un générateur de signal de correction de la tache (65) pour produire un signal de correction de la tache (S65) selon le signal de sortie (S64, N64) dudit détecteur de niveau moyen de luminance (64) et le signal de sortie (S67) dudit détecteur de période d'écrêtage (66, 67); et
   - un soustracteur (61) pour soustraire le signal de correction de la tache (S65) du signal vidéo numérique (S5).

2. Caméra vidéo selon la revendication 1, dans laquelle ledit détecteur de période d'écrêtage comprend:
   - un comparateur (66) pour comparer le niveau dudit signal vidéo numérique (S5) pendant une période de temps de plusieurs trames à un niveau prédéterminé (V5); et
   - un compteur (67) pour compter les signaux vidéo numériques (S66) détectés par ledit comparateur (66) comme ayant un niveau au-dessus dudit niveau prédéterminé (V5).

**3.** Caméra vidéo selon la revendication 1 ou la revendication 2, dans laquelle ledit générateur de signal de correction de la tache comprend:
- un détecteur de variation du signal de la tache (65) pour fournir séquentiellement des signaux numériques successifs à deux éléments binaires (SD) correspondant à la variation du signal de correction de la tache de la trame courante par rapport au signal de correction de la tache de la trame précédente; et
- un intégrateur (71) pour intégrer lesdits signaux numériques à deux éléments binaires (SD) et le signal de correction de la tache de la trame précédente, et fournir la valeur de l'intégrale comme signal de correction de la trame courante (S71).

**4.** Caméra vidéo selon la revendication 1 ou la revendication 2, dans laquelle ledit générateur de signal de correction de la tache comprend:
- un détecteur de variation du signal de la tache (65) pour produire un signal numérique à un élément binaire (SD) qui correspond à la variation du signal de correction de la tache de la trame courante par rapport au signal de correction de la tache de la trame précédente; et
- un compteur-décompteur (72) commandé en réponse audit signal numérique (SD) en synchronisme avec un signal d'horloge (CK) d'un cycle prédéterminé de manière à augmenter, diminuer ou maintenir le compte de celui-ci et fournir la valeur comptée comme étant ledit signal de correction de la tache (S72).

**5.** Caméra vidéo selon l'une quelconque des revendications précédentes, comprenant;
- un circuit à caractéristique coudée S6 monté entre ledit capteur d'images (1) et ledit convertisseur analogique/numérique (5) et servant à compresser le signal de sortie dudit capteur d'images (1) ayant un niveau quelconque au-dessus d'un niveau prédéterminé; et
- un convertisseur inverse (63) monté entre ledit convertisseur analogique/numérique (5) et ledit détecteur de niveau moyen de luminance (64) et servant à traiter le signal d'une manière inverse du traitement exécuté par ledit circuit à caractéristique coudée (4).

**6.** Circuit de correction de la tache pour une caméra vidéo qui produit un signal vidéo numérique (S5), dans lequel toute composante d'un signal d'image au-dessus d'un niveau prédéterminé de luminance (V5) est écrêté, le circuit (6) comprenant:
- un détectuer de niveau moyen de luminance (64) pour détecter le niveau moyen de la luminance pendant une période de temps de plusieurs trames du signal vidéo numérique (S5);
- un détecteur de période d'écrêtage (66, 67) pour détecter la durée de la période de temps dans lequelle le signal d'image est écrêté pendant la formation du signal vidéo numérique (S5);
- un générateur de signal de correction de la tache (65) pour produire un signal de correction de la tache (S65) selon le signal de sortie (S64, N64) dudit détecteur de niveau moyen de luminance (64) et le signal de sortie S67 dudit détecteur de période d'écrêtage (66, 67); et
- un soustracteur (61) pour soustraire le signal de correction de la tache (S65) du signal vidéo numérique (S5).

**7.** Circuit de correction de la tache selon la revendication 6, dans lequel ledit détecteur de période d'écrêtage comprend:
- un comparateur (66) pour comparer le niveau desdits signaux vidéo numériques (S5) pendant une période de temps de plusieurs trames à un niveau prédéterminé (V5); et
- un compteur (67) pour compter les signaux vidéo numériques (S66) détectés par ledit comparateur (66) comme ayant un niveau au-dessus dudit niveau prédéterminé (V5).

**8.** Circuit de correction de la tache selon la revendication 6 ou la revendication 7, dans lequel ledit générateur de signal de correction comprend:
- un détecteur de variation du signal de correction de la tache (65) pour fournir séquentiellement des signaux numériques à deux éléments binaires (SD) correspondant à la variation du signal de correction de la tache de la trame courante par rapport au signal de correction de la tache de la trame précédente; et
- un intégrateur (71) pour intégrer lesdits signaux numériques à deux éléments binaires (SD) et le signal de correction de la tache de la trame précédente, et fournir la valeur de l'intégrale comme signal de correction de la tache de la trame courante (S71).

**9.** Circuit de correction de la tache selon la revendication 6 ou la revendication 7, dans lequel ledit générateur de signal de correction de la tache comprend:

- un détecteur de variation du signal de la tache (65) pour produire un signal numérique à un élément binaire (SD) qui correspond à la variation du signal de correction de la tache de la trame courante par rapport au signal de correction de la tache de la trame précédente; et
- un compteur-décompteur (72) commandé en réponse audit signal numérique (SD) en synchronisme avec un signal d'horloge (CK) d'un cycle prédéterminé, de manière à augmenter, diminuer ou maintenir le compte de celui-ci et fournir la valeur comptée comme étant ledit signal de correction de la tache (S72).

FIG. 1

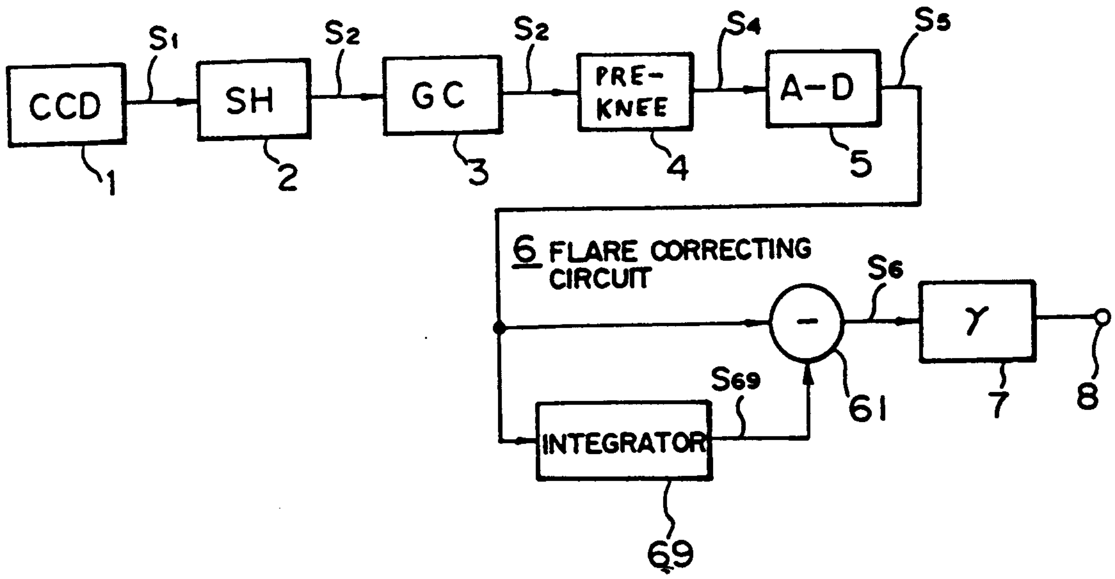
CCD
SH
GC
PRE-KNEE
A-D
S1
S2
S2
S4
S5
1
2
3
4
5
6 FLARE CORRECTING CIRCUIT
S6
-
γ
S69
INTEGRATOR
61
7
8
69

FIG. 2

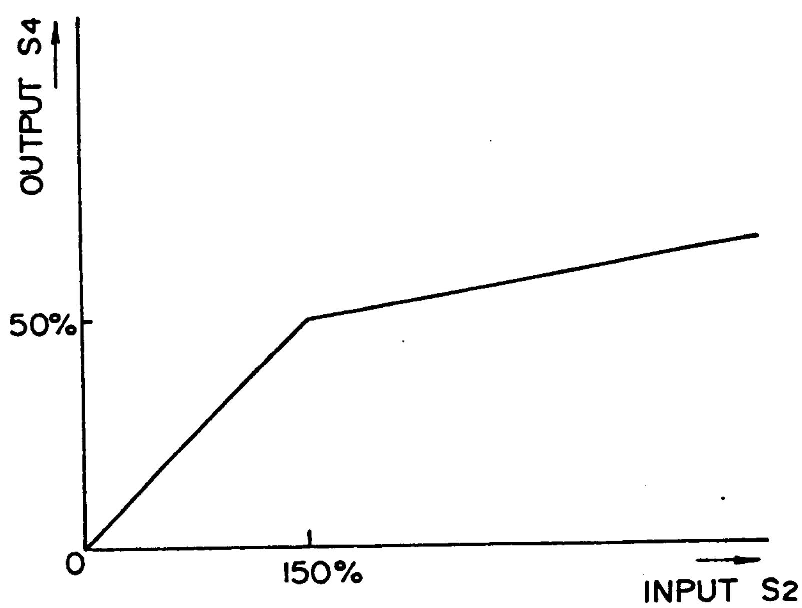
OUTPUT S4
50%
0
150%
INPUT S2

FIG. 3A

FIG. 3B

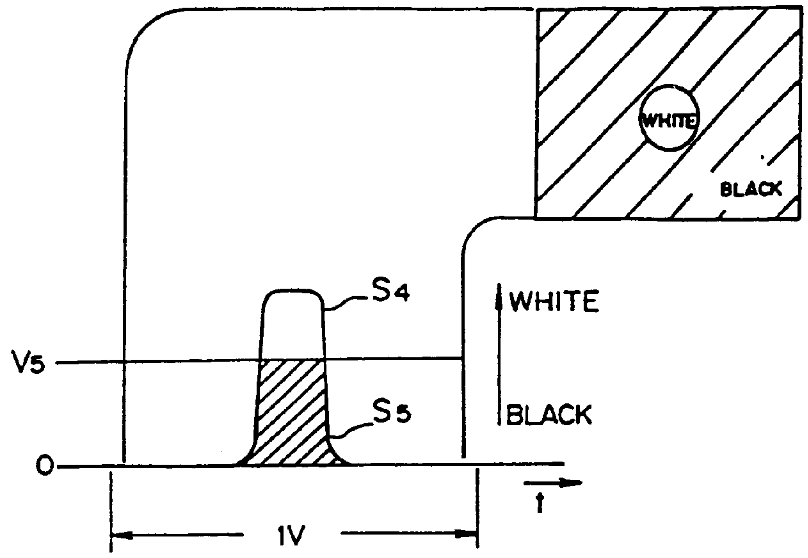


FIG. 4

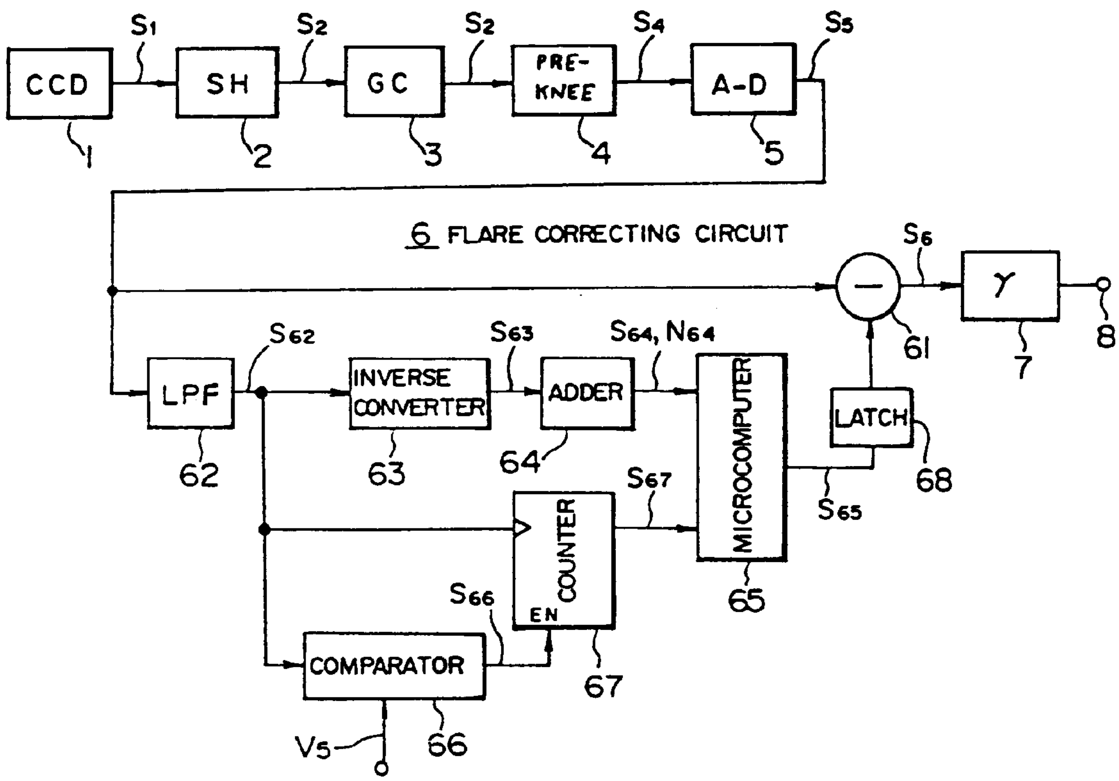

FIG. 5

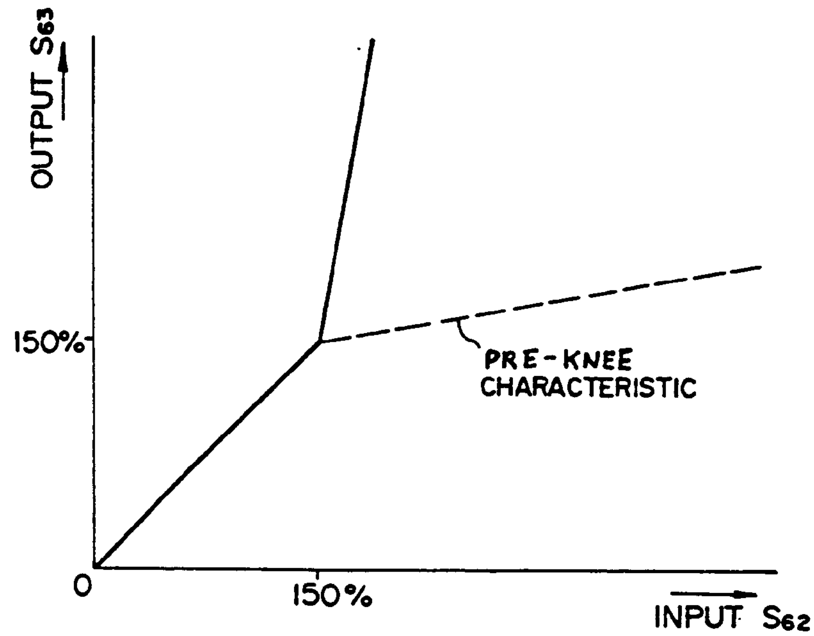


FIG. 6A

FIG. 6B

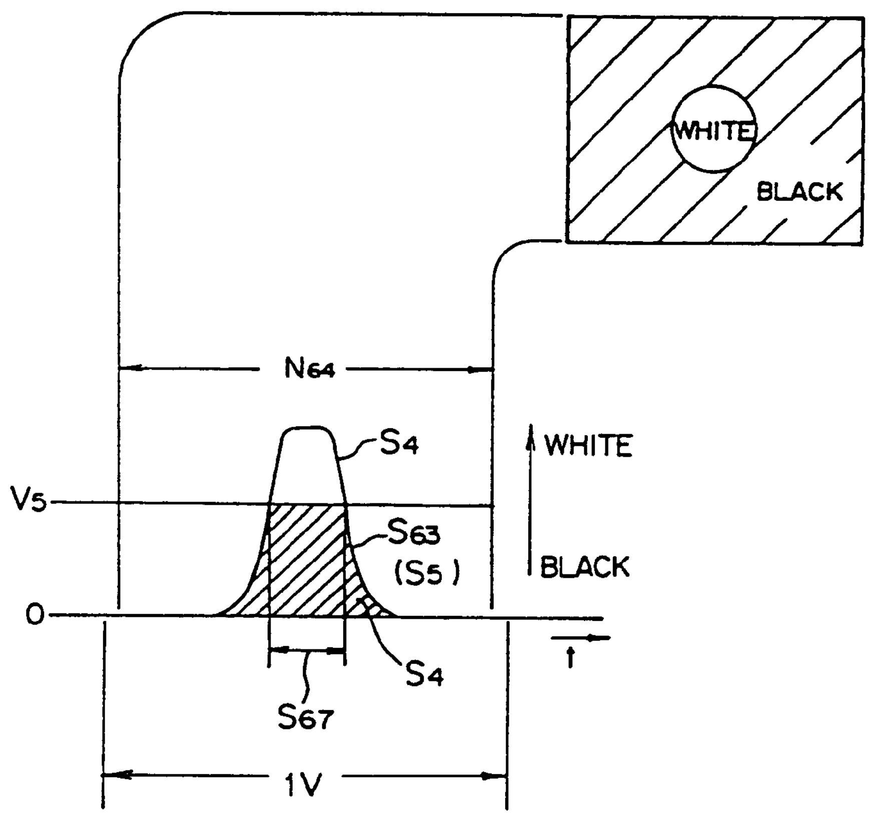

FIG. 7

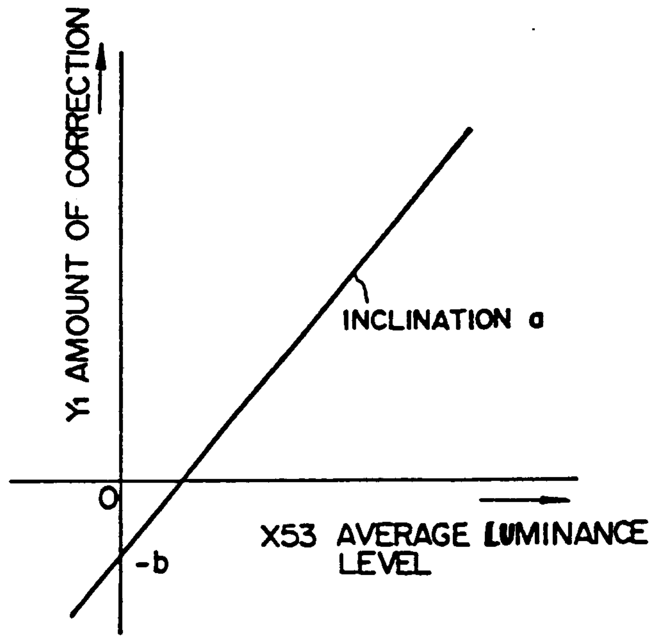
Y1 AMOUNT OF CORRECTION
INCLINATION a
0
-b
X53 AVERAGE LUMINANCE LEVEL

FIG. 8

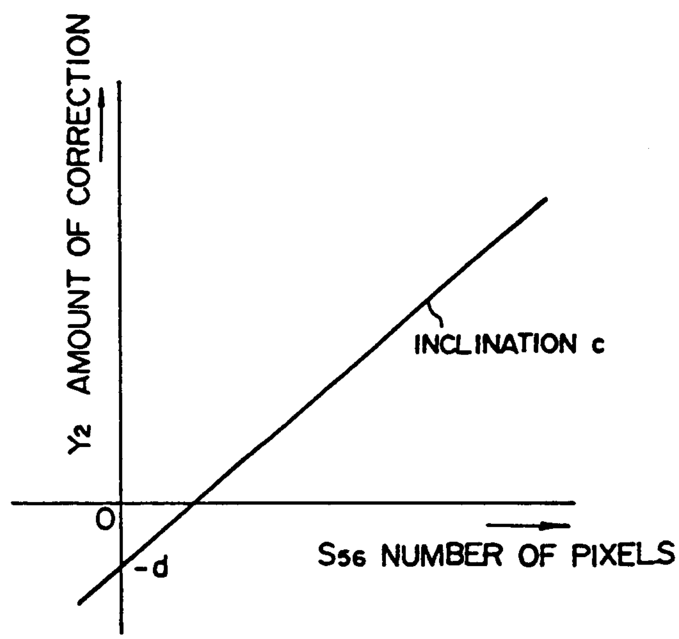
Y2 AMOUNT OF CORRECTION
INCLINATION c
0
-d
S56 NUMBER OF PIXELS

FIG. 9

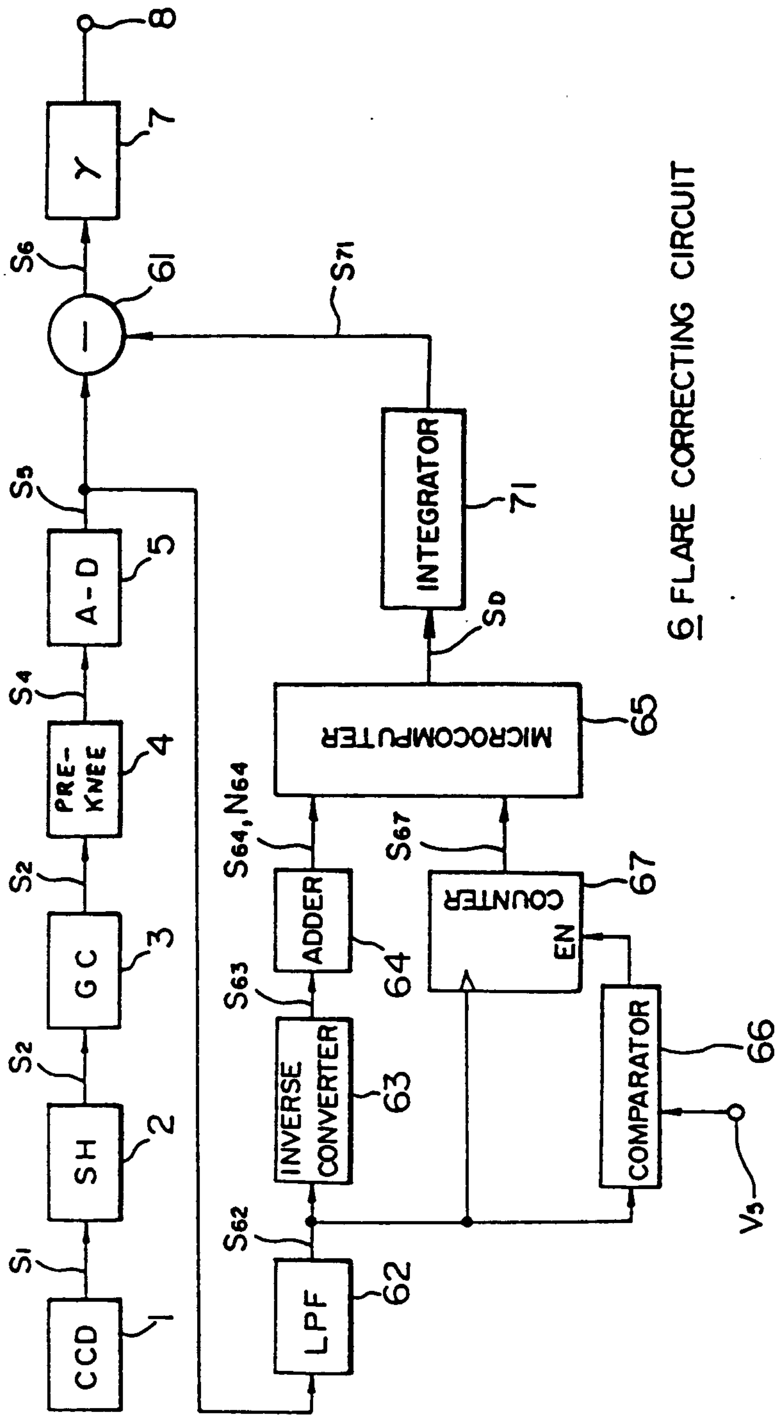
CCD
SH
GC
PRE-KNEE
A-D
γ
LPF
INVERSE CONVERTER
ADDER
MICROCOMPUTER
COUNTER
EN
COMPARATOR
INTEGRATOR
S1
S2
S4
S5
S6
S62
S63
S64, N64
S67
SD
S71
VS
1
2
3
4
5
7
8
61
62
63
64
65
66
67
71
6 FLARE CORRECTING CIRCUIT

FIG. 10

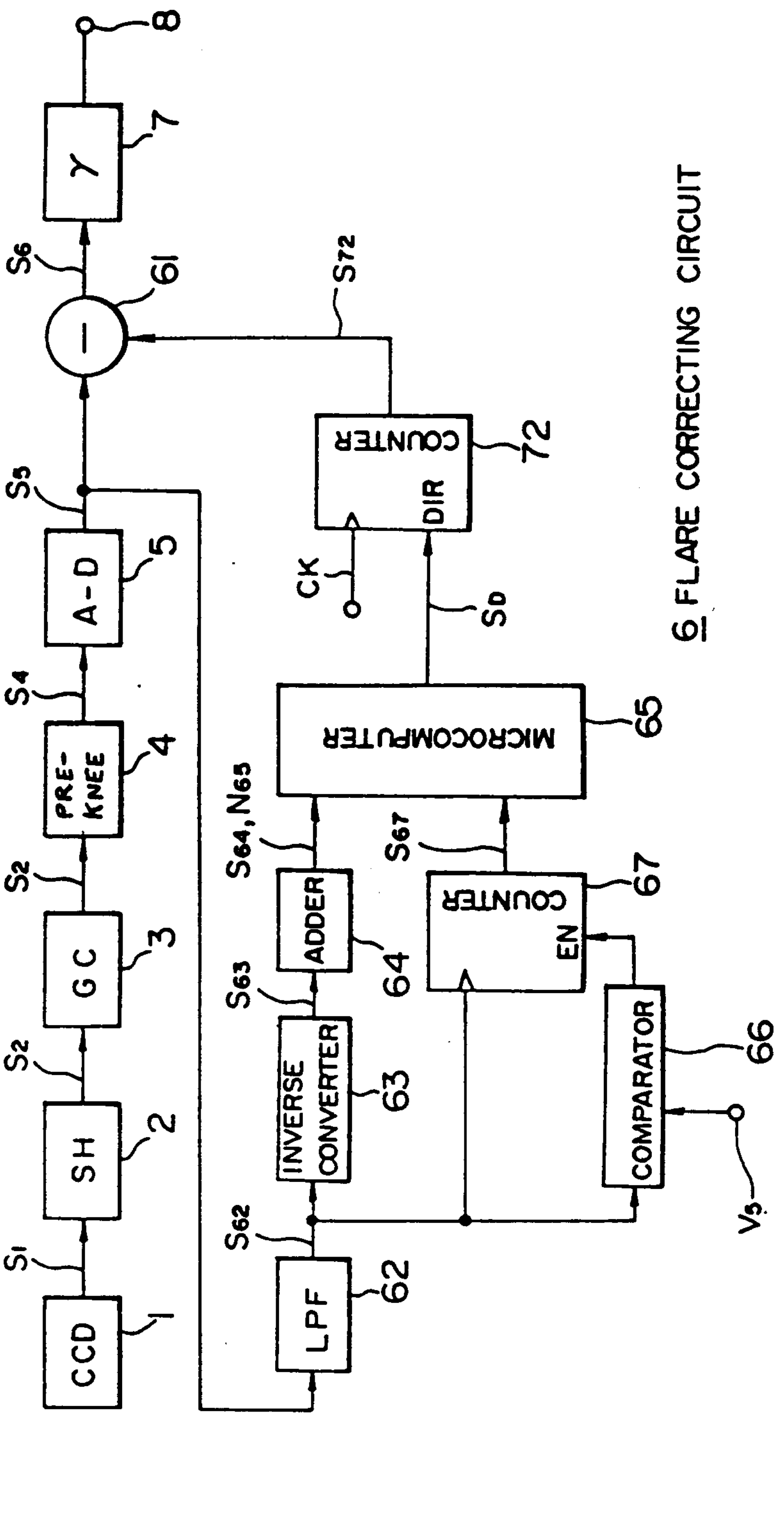
CCD
SH
GC
PRE-KNEE
A-D
γ
MICROCOMPUTER
COUNTER
DIR
CK
COUNTER
EN
LPF
INVERSE CONVERTER
ADDER
COMPARATOR
6 FLARE CORRECTING CIRCUIT

FIG. 11

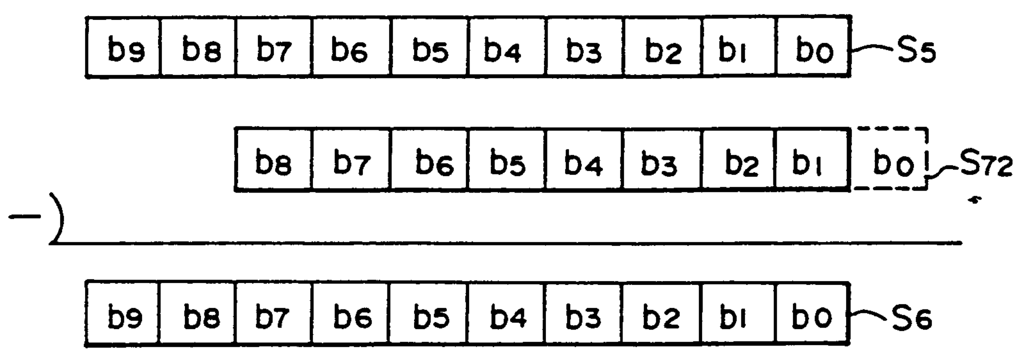
b9 b8 b7 b6 b5 b4 b3 b2 b1 b0
S5
b8 b7 b6 b5 b4 b3 b2 b1 b0
S72
−)
b9 b8 b7 b6 b5 b4 b3 b2 b1 b0
S6

FIG. 12

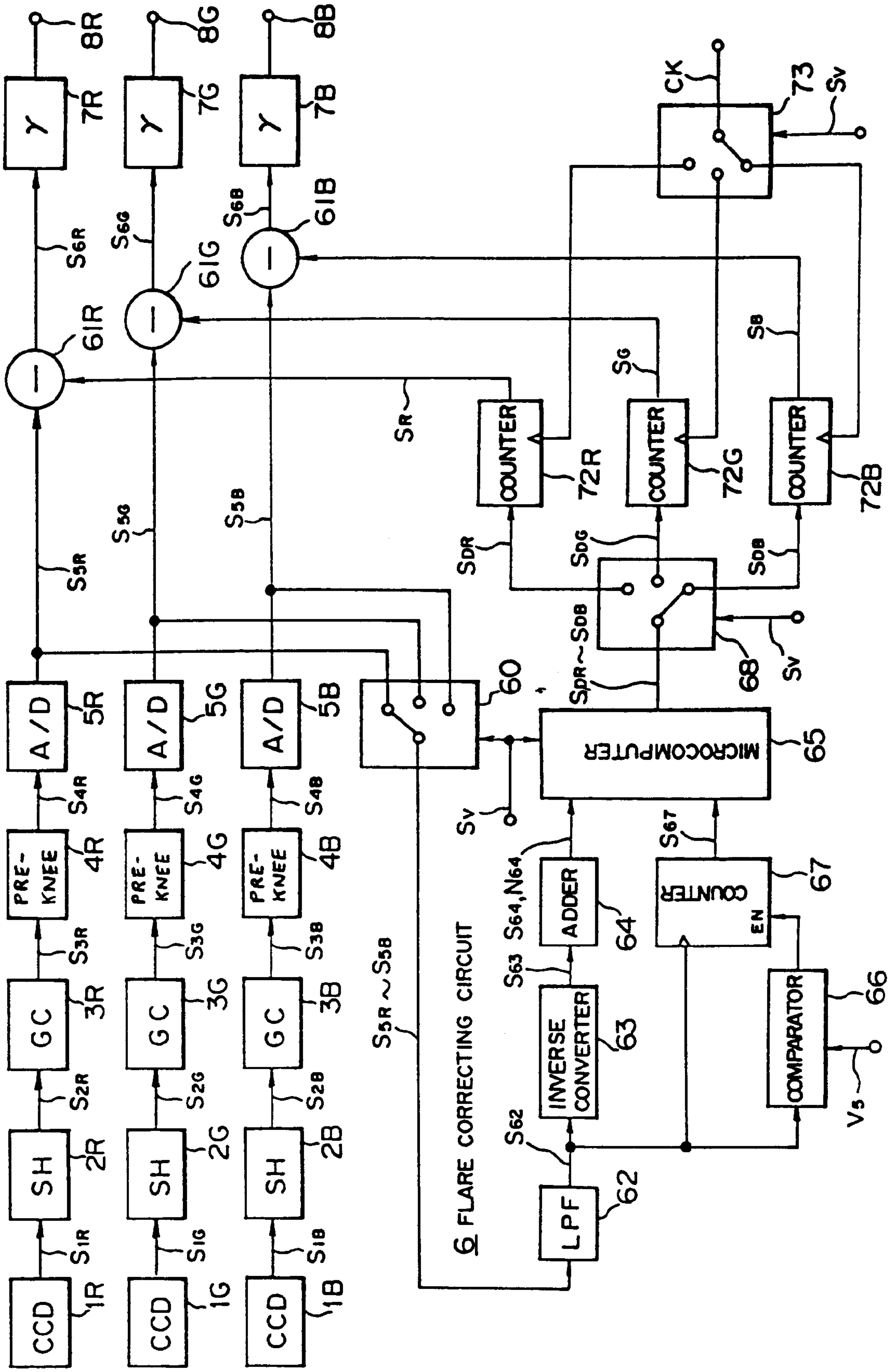
CCD
SH
GC
PRE-KNEE
A/D
γ
COUNTER
MICROCOMPUTER
ADDER
INVERSE CONVERTER
LPF
COMPARATOR
6 FLARE CORRECTING CIRCUIT
1R 1G 1B 2R 2G 2B 3R 3G 3B 4R 4G 4B 5R 5G 5B 7R 7G 7B 8R 8G 8B
60 61R 61G 61B 62 63 64 65 66 67 68 72R 72G 72B 73
CK
Sv
Vs
EN